# EUROPEAN PATENT SPECIFICATION

(11) **EP 1 570 546 B1**
(45) Date of publication and mention of the grant of the patent: **24.07.2013**
(21) Application number: 03774438.0
(22) Date of filing: 01.12.2003
(51) Int. Cl.: H04W 88/08

(54) **ADAPTIVE PASSIVE DISTRIBUTED ANTENNA SYSTEM**
ADAPTIVES, PASSIV VERTEILTES ANTENNENSYSTEM
SYSTEME PASSIF, ADAPTATIF D'ANTENNES DISTRIBUÉES

(30) Priority: 02.12.2002 SE 0203557
(43) Date of publication of application: 07.09.2005
(73) Proprietor: TELIASONERA AB, 106 63 Stockholm (SE)
(72) Inventor: SCHUH, Ralf, S-224 78 Lund (SE); SOMMER, Magnus, S-138 37 ÄLTA (SE)
(74) Representative: Hopfgarten, Nils
(86) International application number: PCT/SE2003/001851
(87) International publication number: WO 2004/051804

(56) References cited:
- WO-A1-01/59874
- US-A- 4 972 505
- US-A- 5 638 422
- US-A- 6 023 625
- US-A1- 2002 191 565
- US-A1- 2003 087 672

## Description

### Technical field

The present invention relates to a distributed antenna system which includes a base station, at least one transmission line, for transmission of signals, connected with the base station and at least two antennas and a method to minimize the interference within the by the distributed antenna system created network and between the by the distributed antenna system created network and surrounding at least one network.

### Prior art

Passive distributed antenna systems is the most popular choice with the aim to provide coverage for, for example, mobile telephones within buildings. The radio signal is transmitted/fed from a base station via, for instance, a coaxial cable to the placed/distributed antennas. Distributed antenna systems both for use indoors and outdoors make a uniform power distribution to the distributed antennas possible and by that resulting in lower interference between cells, both within the by the distributed antenna system created network and surrounding at least one network.

Conventional distributed antenna systems are using about eight antennas per coaxial cable. The attenuation out to the different antennas are usually set/adjusted to the same level by differently adjusted/set signal division devices or directional couplers with different coupling values. The attenuation is fixed and conventionally about 30 to 40 dB. The conventional distributed antenna systems are designed/arranged for operation frequencies up to 2,2 GHz, among them for GSM-operation (Global System Mobility) (900/1800 MHz) and future UMTS-operation (Universal Mobile Telecommunication System) (2000 MHz) .

UMTS is an interference limited system, at which the own cells and the cells of surrounding at least one network limit the coverage and capacity of the system. Operators in Europe often have two or three duplex carriers available for WCDMA-operation (Wideband Code Division Multiplex Access) and further 5 MHz for TD-CDMA-operation (Time Division -Code Division Multiplex Access). The TD-CDMA-operation is from a commercial point of view behind the more popular WCDMA-operation. Cells at the by a distributed antenna system created network and cells at/of the surrounding at least one network can be expected to utilize the same WCDMA carrier frequencies. The operators are confronted with a heterogeneous CDMA-network where the smaller cells at/of the by a distributed antenna system created network is within a larger cell at/of a surrounding at least one network.

For WCDMA the output power of the antennas within the distributed antenna system shall be ideally set/adjusted to different power levels with the aim to minimize the interference from the by the distributed antenna system created network to the surrounding at least one network and from the surrounding at least one network to the by the distributed antenna system created network (coupling effects).

In one example an indoor user, who is sitting close to a window, can experience higher interference from the surrounding at least one network, whereas an indoor user in the center of the building experiences a lower interference from the surrounding at least one network. In a conventional distributed antenna system (DAS), both indoor users receive equally great power from the distributed antenna system, in spite of the user close to the window needing a higher power with the aim to overcome the interference from the surrounding at least one network.

Appropriate simulations at Telia AB have shown that at LOS-conditions (Line of Sight), that is, when there are no obstacles for instance in form of other buildings between a base station for/of the surrounding at least one network and a concerned floor within the distributed antenna system, that is, that an indoor user at the floor in question in principle has possibility to, with the naked eye, see the base station for/of the surrounding at least one network, the indoor capacity is significantly reduced (for transmission paths to the antennas with an attenuation of 30 to 40 dB). The interference level indoors was twice as high as normally was expected in a homogenous surrounding network outdoors. For cities such as Malmö and Stockholm with base station antennas on the roofs of the houses, the probability for LOS-conditions within a radius of 300 meters around the base station is between 10 and 60%. On basis of the simulation results also was observed that 14 to 33% of the indoor users had connection established to the surrounding at least one network outdoors, at which these users reduce the capacity of the surrounding at least one network.

The above mentioned scenario varies from case to case depending on the building for which the distributed antenna system is arranged and the location/placing of the antennas of the surrounding at least one network and the internal distributed antenna system.

Today there are a plurality of different alternative distributed antenna systems, both passive and active.

WO 02/11314 A2 describes a distributed antenna system within a communication system which includes a programmable band pass filter at each antenna. Control information from a processor allocated to the base station supplies control information to the programmable band pass filters about on which channels the different antennas shall transmit. In this way a recovery of channels is achieved and channels can dynamically be reused during a period of time with high traffic.

JP 08275229 A describes a passive distributed antenna system for indoor use for portable telephones. A base station is placed on the roof of a building and connected with at least one external antenna. The base station and the external antenna are via a coaxial cable connected with couplers/connectors at/on each floor, which in their turn are connected with an antenna each, at which the power is distributed to the antenna of respective floor.

US 5 802 173 describes a technical solution to improve the coverage area for a mobile telephone system by utilizing existing communication networks, such as coaxial cable networks (CATV). The solution implies that active antennas are distributed along these cables. US 5 802 173 describes a large number of embodiments which are based on coaxial cable networks. Most of these, however, imply active components and down mixing of the carrier frequency.

US 5 432 838 describes a radio based communication system and particularly a communication system for use in mines or similar environments. The communication system includes a broadband distribution system with a plurality of connection/coupling points for transmission, at which there to the broadband distribution system are connected a plurality of antennas, and devices to keep signal levels within wanted limits, at which the devices to maintain signal levels within wanted limits can include a plurality of amplifiers located in the broadband distribution system.

To-day's passive distributed antenna systems (DAS) do not allow any flexibility since the attenuation to each antenna within the distributed antenna system is fixed. Passive distributed antenna systems (DAS) of today designed for GSM thus cannot be adjusted and reset for optimized GSM- and UMTS-operation and in the cases when the cell architecture of the surrounding network outdoors is changed, no adaptation can be made of the by the distributed antenna system created network. Using a coaxial cable from the base station for each antenna within the distributed antenna system would not be economical.

Active distributed antenna systems, where for instance amplifiers or active filters are placed at the antenna or along the coaxial cable, results in noise, distortion and interference, which should be avoided.

### The aim of the invention

The aim is achieved by a distributed antenna system according to claim 1, and by a method to minimize the interference within the by the distributed antenna system created network and between the by the distributed antenna system created network and at least one surrounding network according to claim 9.

### Summary of the invention

The present invention thus relates to a distributed antenna system including at least one base station, at least one transmission line for transmission of signals connected with the base station and at least two antennas. Each antenna and the transmission line are connected via a variable control device including only passive components arranged to divide signals into subsignals in a variable way and control the strength of the subsignals in a variable way with the aim to minimize the interference within the by the distributed antenna system created network and between the by the distributed antenna system created network and surrounding at least one network. Since the control device only includes passive components, this makes a totally passive distributed antenna system possible. By the control device the output power of each separate antenna is adapted so that there can be an adaptation of the antenna system and consequently a minimization of the interference between the by the distributed antenna system created network and surrounding at least one network and within the by the distributed antenna system created network. The transmission line is, for instance, a coaxial cable. The number of base stations of course can be more than one. The antenna system also can include more than one coaxial cable. The number of antennas are adapted according to the environment where the distributed antenna system is arranged; a suitable number can be from six to twelve, but can of course be more or fewer. The antennas receive signals from the base station via the transmission line and the control device and receive signals from the users within the by the distributed antenna system created network and transmit these signals to the base station via the control device and the transmission line. The control device is variable to make it possible to adjust and reset the power level of the antennas depending on surrounding environment and traffic level.

The distributed antenna system according to the present invention implies apparent advantages in relation to present fixed/static solutions. The distributed antenna system (DAS) according to the invention created for GSM can be adjusted and reset for optimized GSM- and UMTS-operation. The distributed antenna system according to the invention can be optimized depending on traffic and user requirements. In case that the cell architecture at/of the surrounding at least one network is changed, for instance by new base stations being added, cells within the by the distributed antenna system created network can be adapted to the new conditions. The distributed antenna system according to the invention provides a uniform radio coverage both for the surrounding at least one network and the by the distributed antenna system created network. The distributed antenna system according to the present invention provides a passive distributed antenna system at the same time as it offers the flexibility of an active distributed antenna system.

In the distributed antenna system according to the present invention, the control device includes a variable directional coupler and at least one variable passive adjustment device for the signal strength level. This directional coupler is arranged to divide signals coming from the base station and the transmission line into subsignals. One part of the signal is transmitted to the to the control device allocated antenna, whereas remaining subsignals are forwarded/further transmitted along the transmission line to subsequent antennas. The directional coupler also attends to that signals from users within the by the distributed antenna system created network via the antenna will be the base station to hand. In most cases each antenna is allocated a control device, but in the cases when the system only includes two antennas, these antennas can share the same control device. This also can be the case for the two antennas which are connected furthest on the transmission line, that is, furthest from the base station.

The variable directional coupler makes a variation of the signal division possible. The power levels of the different antennas thus can be adjusted and changed to minimize unwanted interference.

The variable passive adjustment device can, for instance, be a variable attenuator. In the cases when two antennas share the same control device, the control device can include two passive adjustment devices, one variable passive adjustment device allocated to each antenna. This also applies to other in the control device included components in excess of the directional coupler.

According to one advantageous embodiment of the distributed antenna system according to the invention, the control device includes a variable directional coupler and at least one passive frequency selective adjustment device, for the signal strength level, which can be a passive filter. To include a passive, frequency selective adjustment device makes attenuation of certain selected frequency bands which are of interest possible. Also a variable or not variable, passive adjustment device for the signal strength level can be included in this embodiment.

According to yet another advantageous embodiment of the distributed antenna system according to the invention, the control device includes a directional coupler, at least one variable, passive adjustment device for the signal strength level, for instance a variable attenuator, and at least one passive, frequency selective adjustment device, for the signal strength level, which can be a passive filter.

According to yet another advantageous embodiment of the distributed antenna system according to the invention, the control device includes a variable directional coupler, at least one pair of passive signal separating filters, arranged to separate different signals and separate antenna signals from signals from the transmission line, between which a first passive adjustment device for the signal strength level and a second passive adjustment device for the signal strength level are connected. The passive adjustment devices for the signal strength level can, for instance, be attenuators.

According to one more advantageous embodiment of the distributed antenna system according to the invention, the control device includes a directional coupler, at least one pair of passive signal separating filters, arranged to separate different signals and separate antenna signals from signals from the transmission line, between which a first variable, passive adjustment device for the signal strength level and a second, variable, passive adjustment device for the signal strength level are connected. The variable, passive adjustment devices for the signal strength level can, for instance, be variable attenuators.

According to one advantageous embodiment of the distributed antenna system according to the invention, the control device is variable by control at place or by remote control.

According to yet another advantageous embodiment of the distributed antenna system according to the invention, the control device is automatically variable depending on surrounding at least one network and/or the by the distributed antenna system created network.

The present invention also relates to a method to minimize the interference within one by a distributed antenna system created network and between one by a distributed antenna system created network and surrounding at least one network, at which the distributed antenna system includes at least one base station, at least one transmission line for transmission of signals connected with the base station and at least two antennas, by the different antennas being individually adjusted to different signal strength levels with regard to the location of the antennas within the distributed antenna system and in relation to surrounding at least one network.

According to yet another embodiment of the method according to the invention, the different signal strength levels are variable.

According to another embodiment of the method according to the invention, the different antennas are adjusted individually to different signal strength levels with regard to the traffic within the by the distributed antenna system created network and surrounding at least one network.

According to yet another embodiment of the method according to the invention, the different antennas are adjusted individually to different signal strength levels with regard to changes in surrounding network.

According to one embodiment of the method according to the invention, the adjustment of the signal strength levels of the antennas are achieved only/solely by passive division and passive attenuation of the signals.

According to yet another embodiment of the method according to the invention, the adjustment of the signal strength levels of the antennas are achieved by the distributed antenna system according to the invention.

### Brief description of drawings

The present invention now for exemplifying purpose shall be described more in detail by means of examples of embodiments and with reference to the enclosed drawings, in which:
Figure 1 shows one embodiment of the distributed antenna system according to the present invention;
Figure 2a shows one embodiment of a control device of/at the distributed antenna system according to the present invention;
Figure 2b shows another embodiment of a control device of/at the distributed antenna system according to the present invention;
Figure 2c shows yet another embodiment of a control device of/at the distributed antenna system according to the present invention;
Figure 2d shows one more embodiment of a control device of/at the distributed antenna system according to the present invention.

### Detailed description of the drawings

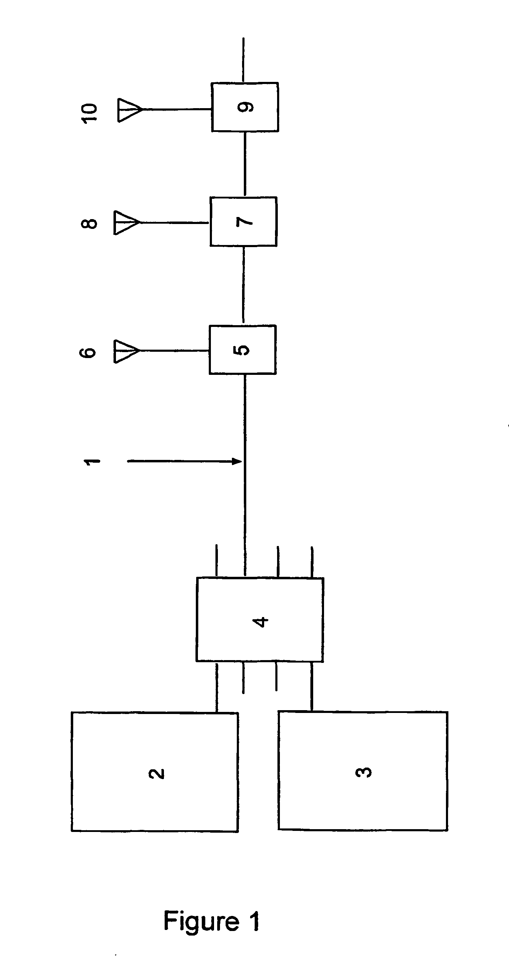

Figure 1 shows a distributed antenna system according to the present invention. A coaxial cable 1 is fed with radio signals from two base stations, one radio base station 2 for GSM and one radio base station 3 for UMTS, via a 4x4 multi-user connection/coupler-matrix 4. The radio signals reach a first control device 5 where the radio signals are divided into subsignals. One part is fed to a first antenna unit 6 and the other part is forwarded/further transmitted along the coaxial cable 1 to next control device 7 where the subsignals are divided and one part is fed to a second antenna unit 8 and the other is forwarded to a third control device 9 at which a third antenna unit 10 is connected. The subsignals then are further transmitted/forwarded along the coaxial cable 1 to further control devices and antennas. The number of control devices 5,7,9 depends on the number of antenna units 6,8,10, which in its turn depends on the environment which is intended to be covered by the distributed antenna system so that all users within the by the distributed antenna system created network has good coverage. The user environment can be both within a building or outdoors. The control devices 5,7,9 can be controlled both at place or by remote control. The different antenna units 6,8,10 are adjusted individually with regard to the location of the antenna units 5,7,9 within the by the distributed antenna system created network and in relation to surrounding at least one network. Since the different antenna units are variable, they easily can be reset/readjusted when there is a change in the traffic within the by the distributed antenna system created network or within surrounding at least one network or a change of the cell architecture of surrounding at least one network, for instance with regard to the number of base stations and their location at surrounding network. The control device also can be automatically variable depending on surrounding at least one network and/or the by the distributed antenna system created network.

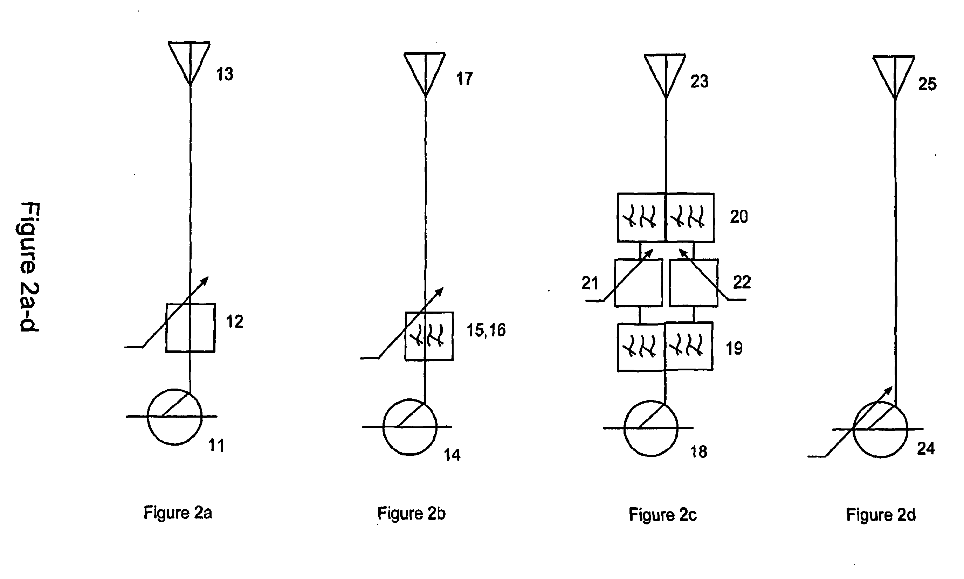

Figure 2a shows an advantageous embodiment of a control device at the distributed antenna system according to the invention. Radio signals are fed via a coaxial cable to a directional coupler 11. The radio signals are divided into subsignals and one part is fed to a variable, passive attenuator 12, where the subsignals are attenuated to suitable levels before they are fed to an antenna unit 13. The subsignals from the base station are attenuated just as much as the radio signals from the users which are received by the antenna unit 13.

Figure 2b shows another advantageous embodiment of a control device at the distributed antenna system according to the invention. Radio signals are fed via a coaxial cable to a directional coupler 14. The radio signals are divided into subsignals and one part is fed to a frequency selective filter 15, then to a variable, passive attenuator 16 where the subsignals are attenuated to suitable levels before they are fed to an antenna unit 17. The addition of a frequency selective filter 15 makes possible for attenuation of only a specific frequency band, for instance UMTS.

Figure 2c shows yet another advantageous embodiment of a control device at the distributed antenna system according to the invention. Radio signals are fed via a coaxial cable to a directional coupler 18. The radio signals are divided into subsignals and one part is fed to a unit consisting of a pair of passive signal separating filters 19,20, for instance diplex- and duplex filter, arranged to separate different signals and separate signals from the antenna 23 from signals from the transmission line. Between the two filters 19,20, a first variable, passive adjustment device 21 for the signal strength level and a second variable, passive adjustment device 22 for the signal strength level are connected each. This construction makes it possible to separate signals from the antenna 23 from signals from the transmission line and give these signals different attenuation.

Figure 2d shows yet another advantageous embodiment of a control device at the distributed antenna system according to the invention. Radio signals are fed via a coaxial cable to a variable directional coupler 24 which divides the radio signals into subsignals. The division of the radio signals can be varied by the variable directional coupler 24 being reset/adjusted and the subsignals thus need not be attenuated by, for instance, an attenuation unit before they are fed to an antenna unit 25. If the variable directional coupler 24 is of wave guide construction, for instance an adjustment screw can be used to change the signal division of the variable directional coupler 24.

The above given/shown embodiments of the control device are examples of possible solutions to get a totally passive control device and consequently a passive distributed antenna system. Combinations of the different embodiments and other variants of the control device of the distributed antenna system according to the invention with maintained passive quality are, however, possible.

## Claims

1. Distributed antenna system including at least one base station (2; 3), at least one transmission line (1), for transmission of signals, connected with the base station (2; 3) and at least two antennas (6; 8; 10), each antenna and the transmission line (1) being connected via a variable control device (5; 7; 9), which includes only passive components and is arranged to divide signals into subsignals , the control device including at least one variable, passive adjustment device (12; 16; 21, 22) arranged to variably control the strength of the subsignals; and the control device (5; 7; 9) is variable by control at place or by remote control **characterized in that** the control device (5; 7; 9) further includes a variable directional coupler (24) arranged to variably divide the signals into subsignals.

2. Distributed antenna system as claimed in claim 1, wherein the at least one variable, passive adjustment device (12; 16; 21, 22) for the signal strength level is an attenuator.

3. Distributed antenna system as claimed in claims 1 or 2, wherein the control device (5; 7; 9) includes at least one passive frequency selective adjustment device (15; 19, 20) for the signal strength level.

4. Distributed antenna system as claimed in claim 3, wherein the passive frequency selective adjustment device (15; 19, 20) for the signal strength level is a passive filter.

5. Distributed antenna system as claimed in claim 1, wherein the control device (5; 7; 9) includes at least one pair of passive signal separating filters (19, 20), arranged for diplex separation of signals and duplex separation of antenna signals from signals from the transmission line (1), between which a first passive adjustment device (21) for the signal strength level and a second passive adjustment device (22) for the signal strength level are connected.

6. Distributed antenna system as claimed in claim 1, wherein the control device (5; 7; 9) includes at least one pair of passive signal separating filters (19, 20), arranged for diplex separation of signals and duplex separation of antenna signals from signals from the transmission line (1), between which a first variable, passive adjustment device (21) for the signal strength level and a second variable, passive adjustment device (22) for the signal strength level are connected.

7. Distributed antenna system as claimed in claim 5 or 6, wherein the first and second adjustment device (21, 22) for the signal strength level each consists of an attenuator.

8. Distributed antenna system as claimed in any of the claims 1 to 6, wherein the control device (5; 7; 9) is automatically variable depending on at least one surrounding network and/or on a network created by the distributed antenna system .

9. Method to minimize interference within a network created by a distributed antenna system as claimed in any of claims 1 to 7, and between the created network and at least one surrounding network, wherein
the different antennas are individually adjusted/set to different variable signal strength levels with regard to the location of the antenna within the created network and in relation to the at least one surrounding network and with regard to traffic within the created network and the at least one surrounding network or changes of the at least one surrounding network, and setting/adjustment of the variable signal strength of the antennas (6; 8; 10) is achieved by solely passive division and passive attenuation of the signals.

## Patentansprüche

1. Verteiltes Antennensystem mit mindestens einer Basisstation (2; 3), mindestens einer Übertragungsleitung (1) zur Übertragung von Signalen, verbunden mit der Basisstation (2; 3) und mindestens zwei Antennen (6; 8; 10), wobei jede Antenne und die Übertragungsleitung (1) über eine Regelvorrichtung (5; 7; 9), die nur passive Komponenten enthält und zum Aufteilen von Signalen in Teilsignale eingerichtet ist, verbunden sind, wobei die Regelvorrichtung mindestens eine variable passive Einstellvorrichtung (12; 16; 21, 22) eingerichtet zum veränderlichen Regeln der Stärke der Teilsignale enthält und die Regelvorrichtung (5; 7; 9) durch Regeln am Ort oder durch Fernregelung veränderlich ist, **dadurch gekennzeichnet, dass** die Regelvorrichtung (5; 7; 9) weiterhin einen veränderlichen Richtkoppler (24) eingerichtet zum veränderlichen Aufteilen der Signale in Teilsignale umfasst.

2. Verteiltes Antennensystem nach Anspruch 1, wobei die mindestens eine veränderliche passive Einstellvorrichtung (12; 16; 21, 22) für den Signalstärkepegel ein Dämpfungsglied ist.

3. Verteiltes Antennensystem nach Ansprüchen 1 oder 2, wobei die Regelvorrichtung (5; 7; 9) mindestens eine passive frequenzfilternde Einstellvorrichtung (15; 19, 20) für den Signalstärkepegel umfasst.

4. Verteiltes Antennensystem nach Anspruch 3, wobei die passive frequenzfilternde Einstellvorrichtung (15; 19, 20) für den Signalstärkepegel ein passives Filter ist.

5. Verteiltes Antennensystem nach Anspruch 1, wobei die Regelvorrichtung (5; 7; 9) mindestens ein Paar passiver Signaltrennfilter (19, 20) eingerichtet zur Diplextrennung von Signalen und Duplextrennung von Antennensignalen aus Signalen von der Übertragungsleitung (1) umfasst, zwischen denen eine erste passive Einstellvorrichtung (21) für den Signalstärkepegel und eine zweite passive Einstellvorrichtung (22) für den Signalstärkepegel verbunden sind.

6. Verteiltes Antennensystem nach Anspruch 1, wobei die Regelvorrichtung (5; 7; 9) mindestens ein Paar passiver Signaltrennfilter (19, 20) eingerichtet zur Diplextrennung von Signalen und Duplextrennung von Antennensignalen aus Signalen von der Übertragungsleitung (1) umfasst, zwischen denen eine erste veränderliche passive Einstellvorrichtung (21) für den Signalstärkepegel und eine zweite veränderliche passive Einstellvorrichtung (22) für den Signalstärkepegel verbunden sind.

7. Verteiltes Antennensystem nach Anspruch 5 oder 6, wobei die erste und zweite Einstellvorrichtung (21, 22) für den Signalstärkepegel jeweils aus einem Dämpfungsglied besteht.

8. Verteiltes Antennensystem nach einem beliebigen der Ansprüche 1 bis 6, wobei die Regelvorrichtung (5; 7; 9) in Abhängigkeit von mindestens einem Umgebungsnetz und/oder einem durch das verteilte Antennensystem erzeugten Netz automatisch veränderlich ist.

9. Verfahren zum Minimieren von Störung in einem durch ein verteiltes Antennensystem nach einem beliebigen der Ansprüche 1 bis 7 erzeugten Netz und zwischen dem erzeugten Netz und mindestens einem Umgebungsnetz, wobei die verschiedenen Antennen individuell auf unterschiedliche veränderliche Signalstärkepegel hinsichtlich des Standorts der Antenne in dem erzeugten Netz und im Verhältnis zu dem mindestens einen Umgebungsnetz und hinsichtlich von Verkehr innerhalb des erzeugten Netzes und des mindestens einen Umgebungsnetzes oder Änderungen des mindestens einen Umgebungsnetzes angepasst/eingestellt werden, und Einstellen/Anpassen der veränderlichen Signalstärke der Antennen (6; 8; 10) durch alleinige passive Aufteilung und passive Dämpfung der Signale erreicht wird.

## Revendications

1. Système d'antenne réparti comprenant au moins une station de base (2; 3), au moins une ligne de transmission (1), pour la transmission de signaux, connectée à la station de base (2; 3) et au moins deux antennes (6; 8; 10), chaque antenne et la ligne de transmission (1) étant connectées par l'intermédiaire d'un dispositif de commande variable (5; 7; 9) qui ne comprend que des composants passifs et qui est agencé de façon à diviser les signaux en des sous-signaux, le dispositif de commande comprenant au moins un dispositif d'ajustement variable passif (12; 16; 21, 22) agencé pour commander de façon variable l'intensité des sous-signaux; et le dispositif de commande (5; 7; 9) étant amené à varier par une commande sur place ou par télécommande, **caractérisé en ce que** le dispositif de commande (5; 7; 9) comprend en outre un coupleur directionnel variable (24) agencé pour diviser de façon variable les signaux en des sous-signaux.

2. Système d'antenne réparti selon la revendication 1, dans lequel l'au moins un dispositif d'ajustement variable passif (12; 16; 21, 22) destiné au niveau d'intensité du signal est un atténuateur.

3. Système d'antenne réparti selon la revendication 1 ou 2, dans lequel le dispositif de commande (5; 7; 9) comprend au moins un dispositif d'ajustement sélectif en fréquence passif (15; 19, 20) destiné au niveau d'intensité du signal.

4. Système d'antenne réparti selon la revendication 3, dans lequel dans lequel le dispositif d'ajustement sélectif en fréquence passif (15; 19, 20) destiné au niveau d'intensité du signal est un filtre passif.

5. Système d'antenne réparti selon la revendication 1, dans lequel le dispositif de commande (5; 7; 9) comprend au moins une paire de filtres de séparation de signaux passifs (19, 20), agencés pour une séparation diplex de signaux et une séparation duplex de signaux d'antenne vis-à-vis de signaux provenant de la ligne de transmission (1), entre lesquels sont connectés un premier dispositif d'ajustement passif (21) destiné au niveau d'intensité du signal et un second dispositif d'ajustement passif (22) destiné au niveau d'intensité du signal.

6. Système d'antenne réparti selon la revendication 1, dans lequel le dispositif de commande (5; 7; 9) comprend au moins une paire de filtres de séparation de signaux passifs (19, 20), agencés pour une séparation diplex de signaux et une séparation duplex de signaux d'antenne vis-à-vis de signaux provenant de la ligne de transmission (1), entre lesquels sont connectés un premier dispositif d'ajustement variable passif (21) destiné au niveau d'intensité du signal et un second dispositif d'ajustement variable passif (22) destiné au niveau d'intensité du signal.

7. Système d'antenne réparti selon la revendication 5 ou 6, dans lequel les premier et second dispositifs d'ajustement (21, 22) du niveau d'intensité du signal sont chacun constitués d'un atténuateur.

8. Système d'antenne réparti selon l'une quelconque des revendications 1 à 6, dans lequel le dispositif de commande (5; 7; 9) est automatiquement variable en fonction d'au moins un réseau environnant et/ou d'un réseau créé par le système d'antenne réparti.

9. Procédé destiné à minimiser le brouillage dans un réseau créé par un système d'antenne réparti selon l'une quelconque des revendications 1 à 7, et entre le réseau créé et au moins un réseau environnant, dans lequel les différentes antennes sont ajustées/réglées individuellement à différents niveaux d'intensité de signal variables en ce qui concerne la position de l'antenne dans le réseau créé et relativement à l'au moins un réseau environnant et en ce qui concerne le trafic passant sur le réseau créé et l'au moins un réseau environnant ou des modifications de l'au moins un réseau environnant, et le réglage/l'ajustement de l'intensité de signal variable des antennes (6, 8, 10) est obtenu uniquement en soumettant les signaux à une division passive et à une atténuation passive.
